Europäisches Patentamt

European Patent Office

Office européen des brevets

(19)

(11)   EP 0 929 834 B1

(12)   FASCICULE DE BREVET EUROPEEN

(45) Date de publication et mention
de la délivrance du brevet:
**17.03.2004   Bulletin 2004/12**

(21) Numéro de dépôt: **98928390.8**

(22) Date de dépôt: **29.05.1998**

(51) Int Cl.⁷: **G02B 17/06**, G02B 23/06

(86) Numéro de dépôt international:
**PCT/FR1998/001083**

(87) Numéro de publication internationale:
**WO 1998/055893 (10.12.1998 Gazette 1998/49)**

(54) **SYSTEME CATOPTRIQUE GRAND ANGULAIRE A MIROIRS**

WEITWINKELIGES KATOPTRISCHES SYSTEM MIT SPEIGELN

WIDE-ANGLE CATOPTRIC SYSTEM WITH MIRRORS

(84) Etats contractants désignés:
**BE DE FR IT NL**

(30) Priorité:  **03.06.1997  FR 9706792**

(43) Date de publication de la demande:
**21.07.1999   Bulletin 1999/29**

(73) Titulaire: **SAGEM S.A.**
**75116 Paris (FR)**

(72) Inventeur: **GEYL, Roland**
**F-94240 L'Hay-les-Roses (FR)**

(74) Mandataire: **Schrimpf, Robert**
**Cabinet Regimbeau**
**20, rue de Chazelles**
**75847 Paris cedex 17 (FR)**

(56) Documents cités:
**EP-A- 0 601 871          US-A- 4 804 258**
**US-A- 5 063 586          US-A- 5 379 157**
**US-A- 5 410 434          US-A- 5 414 555**
**US-A- 5 550 672**

**Description**

L'invention concerne un système catoptrique grand angulaire, notamment pour l'observation astronomique ou spatiale dans une large plage spectrale.

On connaît des combinaisons de miroirs constituant un système grand angulaire, comme décrit par exemple dans les publications EP-A-0 601 871 et US 5 379 157 qui concernent des systèmes à quatre miroirs dont un miroir primaire convexe, qui permettent d'obtenir un champ d'observation d'au moins 13,5° sur 27°.

La présente invention vise à fournir un système de quatre miroirs qui permette d'obtenir un champ d'observation sensiblement plus étendu, de l'ordre de 70° sur 2° au moins.

L'invention vise également à fournir un système de faible distorsion.

L'invention vise encore à fournir un système de faible encombrement.

On y parvient selon la présente invention en utilisant comme miroir secondaire un miroir convexe.

Dans un exemple de réalisation typique d'une combinaison selon l'invention, cette combinaison comprend successivement :

- un miroir primaire (M1) convexe,
- un miroir secondaire (M2) convexe,
- un miroir tertiaire (M3) proche du plan focal, et
- un miroir quaternaire (M4) concave.

Le système optique de l'invention peut encore être défini comme la combinaison d'un miroir d'entrée convexe (M1) et d'un anastigmat à trois miroirs (M2, M3, M4) dont le premier miroir (M2) est convexe également.

La pupille est placée sur le second miroir (M3) de l'anastigmat.

Il peut aussi être défini à rebours comme la combinaison de deux miroirs (M4, M3) agissant un peu comme un télescope de SCHMIDT, le miroir quasi plan (M3) servant de pupille et étant placé au voisinage du foyer de M4 pour obtenir une quasi télécentricité, et de deux miroirs convexes successifs (M2, M1), qui apportent le grand champ souhaité.

Les quatre miroirs sont de préférence asphérisés pour obtenir la correction de la distorsion et d'autres aberrations.

De préférence, l'ensemble de l'objectif, des miroirs et de la structure est réalisé dans un même matériau, comme l'aluminium, l'Invar ou une céramique à bas coefficient de dilatation.

Selon une autre particularité de l'invention, la distance entre les miroirs primaire et secondaire ainsi que la distance entre les miroirs secondaire et tertiaire est comprise entre 2 et 7 fois la distance focale.

On décrira ci-après un exemple de réalisation d'un système optique selon l'invention en référence aux figures du dessin joint sur lequel :

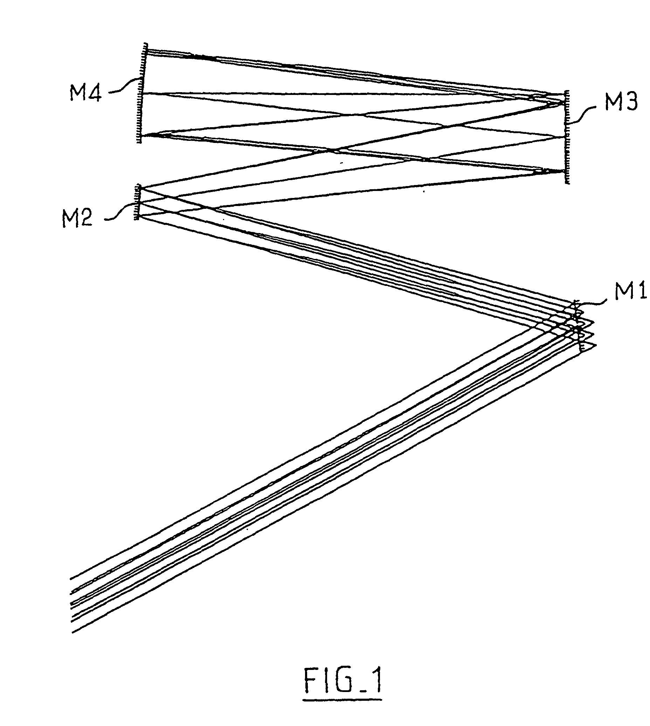

- la figure 1 est un schéma de principe du système optique ;

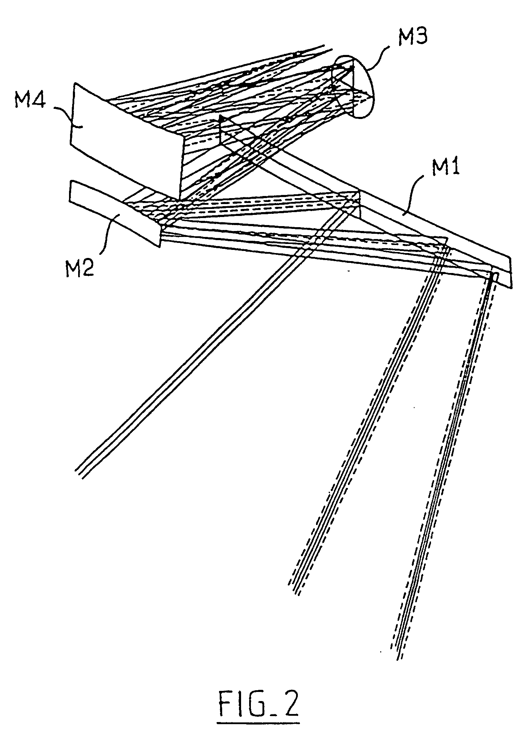

- la figure 2 est une perspective de la formule optique ;

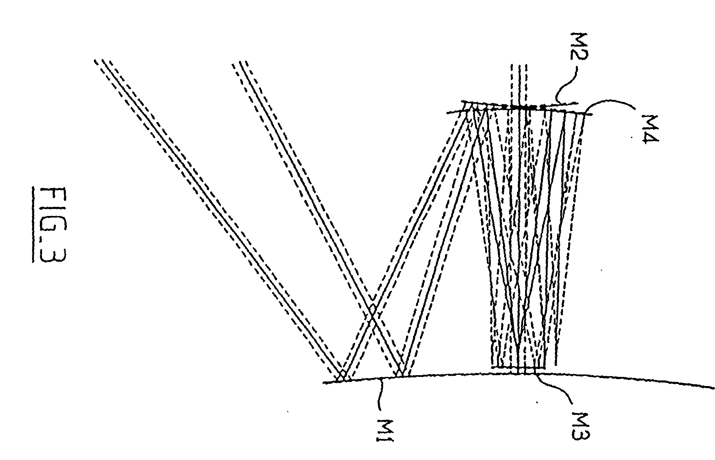

- la figure 3 est une section méridienne de la formule optique, et

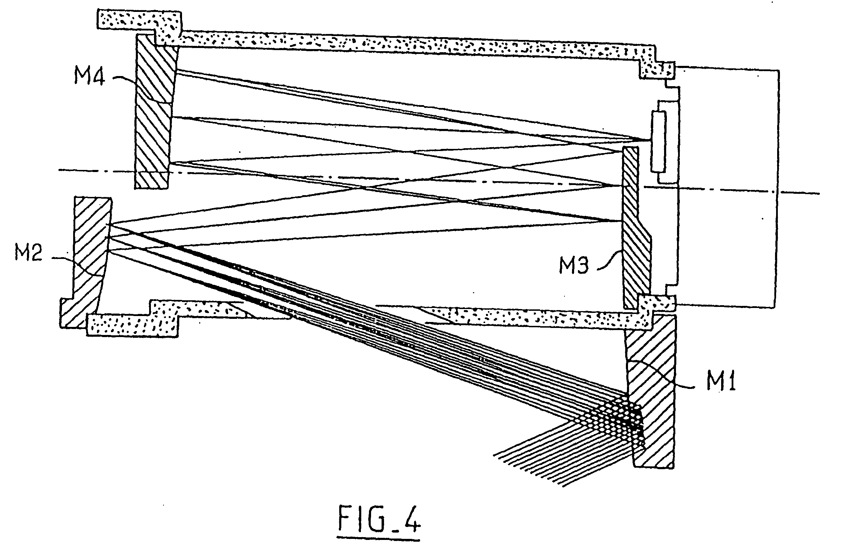

- la figure 4 est un schéma de la structure mécanique du système.

Le système optique se compose de quatre miroirs sphériques.

Ces miroirs sont des formes de révolution. La description de ces surfaces se fait sur une méridienne qui est définie par l'équation de la flèche Z en fonction de la distance h à l'axe optique par la formule suivante :

$$Z = \frac{h^2/R}{1 + \sqrt{1 - (1+k)\dfrac{h^2}{R^2}}} + Ah^4 + Bh^6 + Ch^8 + Dh^{10}$$

avec les coefficients définis comme suit :

R Rayon de courbure au sommet de la surface
k constante de conicité de la surface
A constante de la déformée d'ordre 4
B constante de la déformée d'ordre 6
C constante de la déformée d'ordre 8
D constante de la déformée d'ordre 10

Cette déformation permet de définir la forme des miroirs employés dans la combinaison optique du système.

Le premier miroir de la combinaison ( M1) est centré et possède comme paramètres de surface :

R=493,37 mm convexe
k=- 38,815
A=0
B=- 0,315 x 10e$^{-12}$
C=0,135 x 10e$^{-16}$
D=- 0,214 x 10e$^{-21}$

A une distance de 150 mm de ce premier miroir, le deuxième miroir (M2) de la combinaison possède les paramètres de surface suivants :

R=261,84mm convexe
k=17,540
A=0
B=0,213 x 10e$^{-10}$
C=0,359 x 10e$^{-14}$
D=0

Le troisième miroir de la combinaison (M3) se trouve à 150 mm du M2, en direction de M1. Les paramètres de surface sont les suivants :

R=809,17 mm concave

k=- 41,637

A=0

B=- 0,601 x 10e$^{-11}$

C=0

D=- 0,516 x 10e$^{-17}$

Ce miroir constitue la pupille du système, i.e. il limite le flux collecté par le système optique.

Le quatrième miroir (M4) est situé à une distance de 150 mm du M3, en direction du M2. Les paramètres de surface sont les suivants :

R = 252,498 mm concave

k = 0,0044

A = 0

B = 0,243 x 10e$^{-12}$

C = - 0,386 x 10e$^{-16}$

D = 0

Le nombre d'ouverture du télescope, défini par le rapport entre le focale du système et le diamètre de la pupille d'entrée, est de 3,75.

Le champ admissible par le télescope est de +/-36° selon une direction décentrée de 26.5° dans une direction perpendiculaire à la première direction.

Dans cette réalisation, le premier miroir (M1) et le troisième miroir (M3) sont presque à la même place et sont réalisés sur un même substrat.

La matière utilisée est de préférence l'aluminium ou le silicium pour l'ensemble des miroirs et la structure.

La pupille (P) est placée à proximité du miroir (M3) au voisinage du foyer du miroir (M4).

L'ouverture peut monter typiquement à F/3,75 - F/4.

L'encombrement axial est de cinq à six fois la focale, soit environ 170 mm.

La distorsion est d'environ 1%.

Pour assurer un alignement correct, chaque miroir est usiné en même temps que ses portées d'appui, par usinage diamant.

L'invention n'est pas limitée à cette réalisation.

**Revendications**

1. Système catoptrique grand angulaire et à faible distorsion pour l'observation astronomique ou spatiale, qui comprend un miroir primaire (M1) convexe, un miroir secondaire (M2), un miroir tertiaire (M3) et un miroir quaternaire (M4), **caractérisé en ce que** le miroir secondaire (M2) est convexe.

2. Système selon la revendication 1, dans lequel le miroir tertiaire (M3) est proche du plan focal.

3. Système selon l'une des revendications 1 ou 2, dans lequel le miroir quaternaire (M4) est concave.

4. Système optique selon l'une des revendications 1 à 3, dans lequel la distance (M1-M2) entre les miroirs primaire et secondaire et la distance (M2-M3) entre Les miroirs secondaire et tertiaire sont comprises entre 2 et 7 fois la distance focale.

5. Système optique selon l'une des revendications 1 à 4, dans lequel le premier miroir (M1) et le troisième miroir (M3) sont presque à la même place.

6. Système optique selon l'une des revendications 1 à 5, dans lequel le premier miroir (M1) et le troisième miroir (M3) sont réalisés sur un même substrat.

**Patentansprüche**

1. Weitwinkliges katoptrisches System mit geringer Verzerrung für die astronomische oder räumliche Beobachtung, das einen konvexen primären Spiegel (M1), einen sekundären Spiegel (M2), einer tertiären Spiegel (M3) und einen quarternären Spiegel (M4) umfaßt, **dadurch gekennzeichnet, daß** der sekundäre Spiegel (M2) konvex ist.

2. System nach Anspruch 1, bei dem der tertiäre Spiegel (M3) nahe der Brennpunktsebene liegt.

3. System nach einem der Ansprüche 1 oder 2, bei dem der quarternäre Spiegel (M4) konkav ist.

4. Optisches System nach einem der Ansprüche 1 bis 3, bei dem der Abstand (M1-M2) zwischen dem primären und dem sekundären Spiegel und der Abstand (M2-M3) zwischen dem sekundären und dem tertiären Spiegel zwischen dem 2-und 7-fachen der Brennweite ist.

5. Optisches System nach einem der Ansprüche 1 bis 4, bei dem der erste Spiegel (M1) und der dritte Spiegel (M3) fast an derselben Stelle sind.

6. Optisches System nach einem der Ansprüche 1 bis 5, bei dem der erste Spiegel (M1) und der dritte Spiegel (M3) auf dem gleichen Substrat realisiert sind.

**Claims**

1. A wide-angle catoptric system with low distortion for astronomical or space observation, the system comprising a convex primary mirror (M1), a secondary mirror (M2), a tertiary mirror (M3), and a quaternary mirror (M4), the system being **characterized in that** the secondary mirror (M2) is convex.

2. A system according to claim 1, in which the tertiary mirror (M3) is close to the focal plane.

3. A system according to claim 1 or 2, in which the quaternary mirror (M4) is concave.

4. An optical system according to any one of claims 1 to 3, in which the distance (M1-M2) between the primary and secondary mirrors, and the distance (M2-M3) between the secondary and tertiary mirrors lie in the range twice to seven times the focal length.

5. An optical system according to any one of claims 1 to 4, in which the first mirror (M1) and the third mirror (M3) are almost in the same place.

6. An optical system according to any one of claims 1 to 5, in which the first mirror (M1) and the third mirror (M3) are made on a common substrate.

M4

M3

M2

M1

FIG_1

FIG. 2

FIG.3

FIG_4